# EUROPEAN PATENT APPLICATION

(11) **EP 0 802 659 A1**
(43) Date of publication of application: **22.10.1997**
(21) Application number: 97302414.4
(22) Date of filing: 08.04.1997
(51) Int. Cl.: H04M 1/02

(54) **Portable telephone with pivotally mounted keypad**

(30) Priority: 17.04.1996 US 634110
(71) Applicant: LUCENT TECHNOLOGIES INC., Murray Hill, New Jersey 07974-0636 (US)
(72) Inventor: Joyce, Michael Julian, Blackburn South, Victoria 3130 (AU); Ourmazd, Abbas, 14193 Berlin (DE); Ong, Ping-Wen, Middletown, New Jersey 07748 (US); Warwick, Colin Alan, Holmdel, New Jersey 07733 (US)
(74) Representative: Buckley, Christopher Simon Thirsk

(57) **Abstract**

The size of the display in a portable telephone apparatus (16) is increased by having a push-button keypad (30) located on the outside of a hinged flip member (28). A touch-sensitive display (24) is disposed in the main body of the apparatus so that when the hinged flip member (28) is in the closed position, any selection made from the keypad (30) is communicated to and contacts the touch-sensitive display (24) located below the keypad surface.

## Description

### Field of the Invention

The present invention relates to portable telecommunications devices, and more particularly, to folding-type portable wireless telephones equipped with displays.

### Background of the Invention

An important objective of cutting edge communication technology is enabling individuals to exchange information at anytime or anyplace. In fact, individuals increasingly want the freedom to communicate via both wired and wireless communication devices. To this end, mobile communication networks have recently begun to attract significant commercial use with cellular radio emerging as a leading technology in the area of wireless communications.

The increased popularity of cellular communications has given rise to the use of cellular radio telephones which are portable. There is a tendency today for portable cellular telephones to be made increasingly lighter in weight and compact in order to increase the portability of such devices. One particularly compact portable cellular telephone is the so-called flip telephone which comprises a main body and a hinged flip member.

Typically, in actual use of such a flip telephone, the hinged member is pivoted manually by the user into an open position to initiate a telephone call. All or most of the electronic components of the flip phone are placed within the main body portion of the telephone. The main body typically contains a push-button keypad, a flat panel visual display, a radio transceiver, a battery and all the circuitry required to establish communication with a base station of a cellular network. One commercially popular flip telephone configuration uses the position of the flip member to toggle the telephone between two different telephonic states. These states are sometimes referred to as "active" and "standby". In particular, when the flip member is in a closed position, the telephone is placed in "standby" mode meaning that the telephone will be responsive to an incoming call. When a call arrives, the user of the telephone opens the flip member thereby placing the phone in "active" mode. In this "active" mode the user is able to answer incoming calls or initiate outgoing calls. Commonly, in this flip phone configuration, the detection of the position of the flip member is accomplished by using a standard reed relay consisting of a magnet and a pair of magnetically sensitive electrodes. The reed relay serves as the switching mechanism for placing the flip telephone in a particular telephonic state as a function of the flip member position.

In addition to sometimes being used to switch the telephone between active and standby modes, the flip member also contains elements which provide certain features. The contents of the flip member are dependent upon which of two typical, alternative designs is used for the hinged flip member. In the first design approach, the microphone and ringing element of the telephone are located within the main body portion. Here, the hinged flip member serves to protect the push-buttons of the keypad when the telephone is not in use and reflects the voice of the user into the microphone during a telephone call. In the second design approach, the microphone is housed within the hinged flip member. Here, the hinged member is again pivoted manually by the user into an open position thereby maintaining a select distance between the user's mouth and the microphone.

The popularity of the flip phone design can be attributed to its lightweight and compact nature which allows users to carry the phone comfortably on their person or in a briefcase. But, certain tradeoffs must be made in order to provide such a compact telephone. For example, the flat panel display of present cellular flip phones comprises a relatively small part of the device. This small display area allows only a limited amount of information to be displayed to the user (e.g., the telephone number dialed and certain function descriptions such as "SEND") and does not allow the user to interact directly with the phone through the display. As the use of cellular phones increases and more sophisticated on-line services are accessed by users over the cellular network it will be desirable to display a larger amount of information to the user and provide enhanced interactivity through the display.

One prior art portable telecommunications device having a large display is described in United States Patent No. 5,189,632, issued on February 23, 1993 to Paajanen et al., which discloses a combination portable personal computer and mobile telephone. This device uses the same display screen for both the mobile telephone and computer. The computer keyboard is arranged to be movable between an open and closed position with respect to the body of the device. Thus, when the computer keyboard is in the open position, the entire computer display screen and computer keyboard are accessible to the user for operating the computer. Alternatively, when in the closed position, the computer keyboard member covers most of the computer display screen and leaves a small portion of the display screen visible for use as the mobile telephone display. The mobile telephone is operated by a separate set of push-buttons which are located on the outside cover of the device. Essentially then the device has a keyboard member which is double-sided such that the computer keyboard and mobile telephone push-buttons are on opposite sides of the keyboard member. Although this portable computer and mobile telephone device has a large display screen in comparison to a conventional cellular flip phone, the part of the display dedicated to mobile telephone functionality is small. In particular, the cellular phone half of the device is only operated in the fully closed position and employs that portion of the display which is left exposed by the closed cover.

As additional functionality is designed into cellular flip phones it will be advantageous to provide a larger display space which would allow the user to employ the cellular phone in an enhanced interactive fashion. However, increasing the display area is not a straightforward design change due to the desirability of maintaining the compact nature of the flip phone. Further, the keypad contained in the main body of present standard flip phone designs encompasses a large amount of the total available inside surface area making it difficult for manufacturers to add a larger display area without increasing the overall size of the flip phone.

### Summary of the Invention

An object of the present invention is thus to provide a portable, wireless telephone with a display which is larger than prior art flip telephones without an increase in overall telephone size. In accordance with the invention, the push-button keypad is located on the outside of the hinged flip member of the telephone and a touch-sensitive display is disposed in the main body so that when the hinged flip member is in the closed position, any selection made from the keypad by the user is communicated to and contacts the touch-sensitive display located below the keypad surface. By locating the keypad on the hinged member, a larger surface area on the main body portion is made available for the visual display. When the hinged member is in the open position, the entire touch-sensitive display disposed in the main body is accessible to the user.

In preferred embodiments, the display can be adapted to provide various touch-sensitive options which may be selected by the user through directly touching the display screen.

### Brief Description of the Drawing

FIG. 1 is a perspective view of a prior art wireless flip telephone;
FIG. 2 is a perspective view of a wireless flip telephone constructed in accordance with an illustrative embodiment of the present invention;
FIG. 3 is a front view of the wireless flip telephone of FIG. 2 in a fully closed position;
FIG. 4 is a front view of the wireless flip telephone of FIG. 2 in a fully open position;
FIG. 5 is a block schematic diagram representing an illustrative flat panel display for use in the wireless flip telephone as shown in FIG. 2;
FIG. 6 is a block diagram representing an illustrative touch sensitive overlay for use in the wireless flip telephone as shown in FIG. 2;
FIG. 7-9 show perspective views of an illustrative numeric keypad and push-button arrangement for use in the wireless telephone as shown in FIG. 2;
FIG. 10 is an illustrative user layout of the touch-sensitive display for use in the wireless flip telephone as shown in FIG. 2; and
FIG. 11 is a block diagram representing an illustrative arrangement of the circuitry of the wireless flip telephone as shown in FIG. 2.

### Detailed Description of the Invention

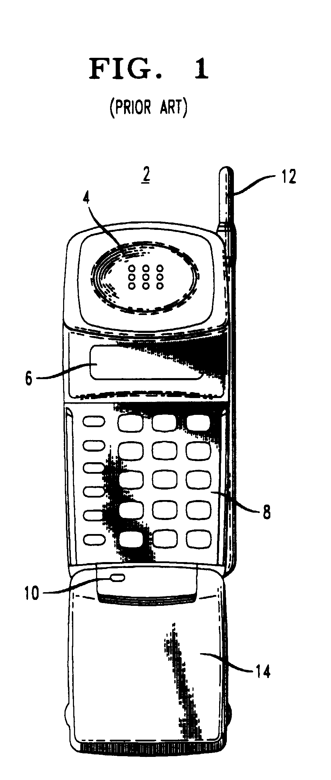

FIG. 1 shows a conventional wireless flip telephone 2 having a visual display 6. In such a conventional telephone, the visual display 6 is typically only 1.5 to 2 inches wide and 0.5 inches high. This small physical footprint typically allows for a 2-line display of 10 characters per line. Increasing the display area of such a conventional flip telephone is not a straightforward design change due to the desirability of maintaining the compact nature of the flip phone. Further, as can be seen in FIG. 1, the keypad 8 contained in the main body of conventional flip phone designs encompasses a large amount of the total available inside surface area. Thus, the ability to add a larger display area without increasing the overall size of the flip phone is severely limited.

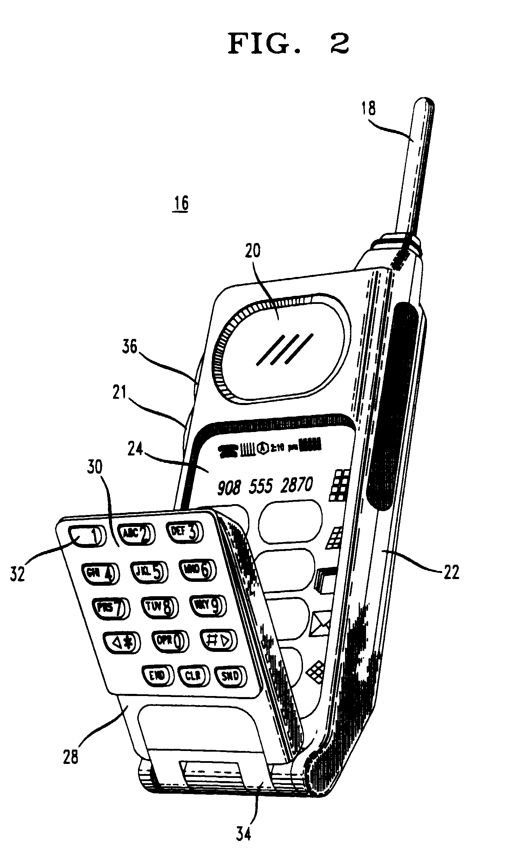

In contrast, the illustrative embodiment of the present invention shown in FIG. 2, is of a wireless flip telephone 16 having a touch-sensitive display 24 measuring approximately 2 inches wide and 3.25 inches high. This significantly larger display surface advantageously provides for the display of an increased amount of information to the user and enables the user to access certain telephone functionality directly from the touch-sensitive display 24.

More particularly, the wireless flip telephone 16 has a main body 22 and a pivoting flip member 28. Flip member 28 has on its outer surface a numeric keypad 30 having plurality of push-buttons 32. The flip member 28 is pivotally connected to the main body 22 by a hinge structure 34. Main body 22 includes a speaker 20, antenna 18, power button 21, volume control button 36, and the touch-sensitive display 24. Advantageously, by locating the numeric keypad 30 and push-buttons 32 on the flip member 28, the touch-sensitive display 24 can be made much larger than prior art displays used in wireless flip telephones. It will be readily apparent to those skilled in the art that the touch-sensitive display 24 should be designed to minimize power consumption during use. Therefore, although any commercially available touch-sensitive display configuration for presenting visual information may be utilized in the present invention, a passive flat panel display configuration such as a liquid crystal display (LCD) with a touch-sensitive overlay is preferred.

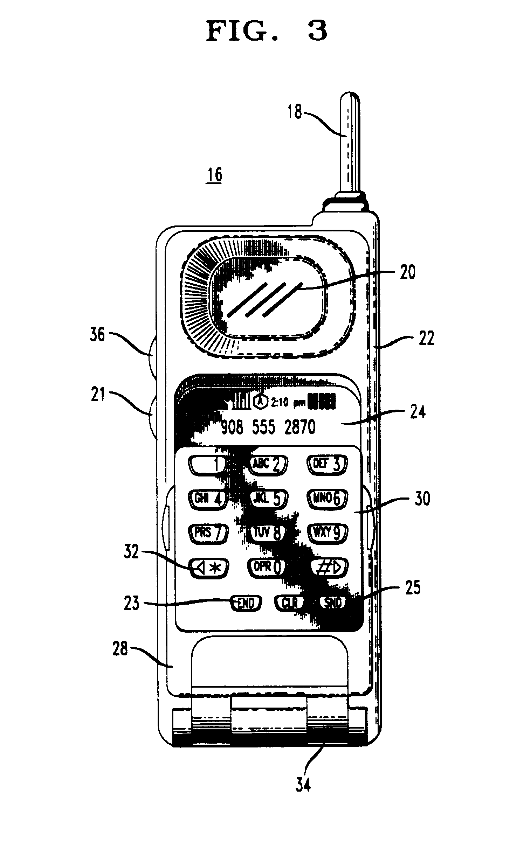

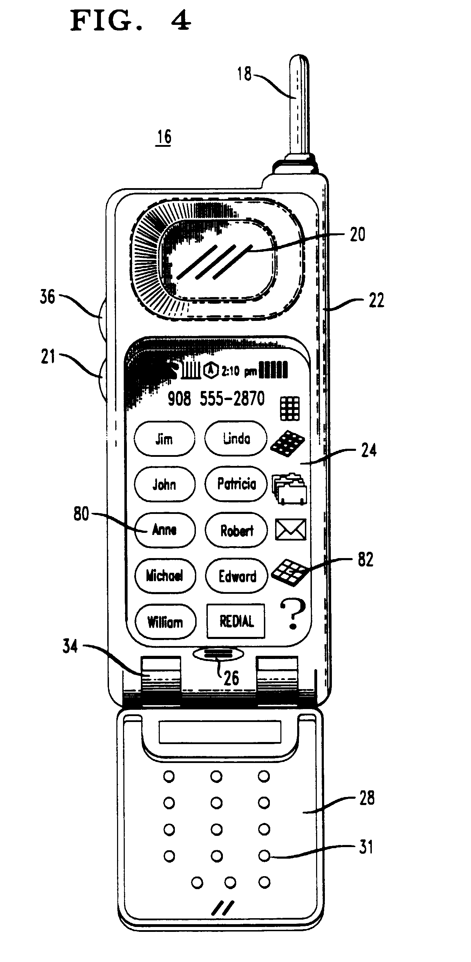

With particular reference to the illustrative embodiments shown in FIG. 3 and FIG. 4, the advantages of the present invention may be more fully appreciated. The closed position depicted in FIG. 3 would be typical for a user in storing or carrying the wireless flip telephone 16. In accordance with the illustrative embodiment of the invention, the position of flip member 28 is detected and thereafter communicated to display circuitry contained in main body 22 for configuring touch-sensitive display 24. As will be apparent to those of ordinary skill in the art, the detection of the flip member position may be accomplished, for example, through the use of a reed relay as discussed previously or through a cam/microswitch combination. Again illustratively, when the user activates the flip telephone 16 by pressing PWR button 21 and the position of flip member 28 is detected as being in the closed position, the touch-sensitive display 24 is placed in a mode to interpret the user dialed telephone number via push-buttons 32 of the numeric keypad 30. After dialing the desired telephone number via push-buttons 32, the user may employ SND key 25 and END key 23 to complete the call in standard fashion across a cellular network.

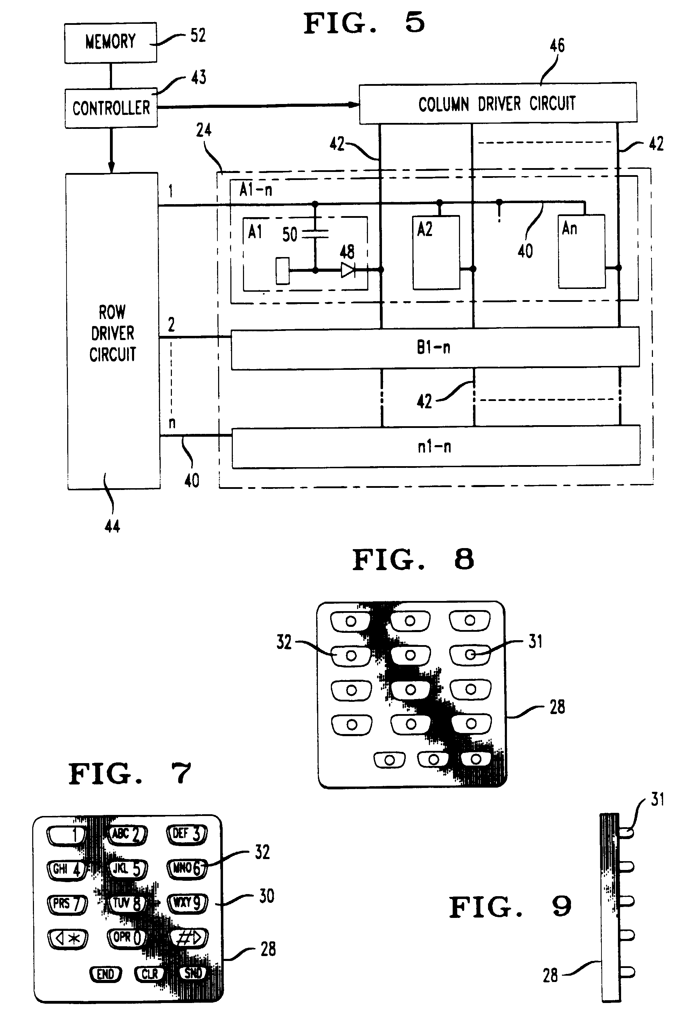

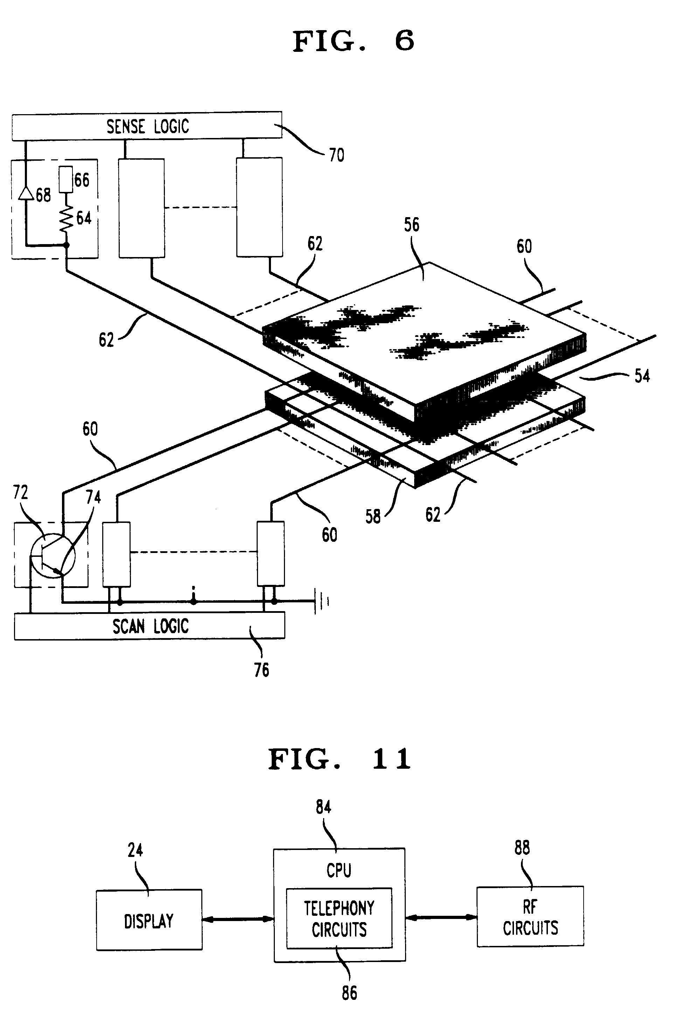

Essentially, push-buttons 32 serve as actuators for communicating key pushes from the user through the flip member 28 to the touch sensitive display 24. This communication is facilitated by having the touch-sensitive display 24 and the push-buttons 32 in a substantially overlapping position when the flip member 28 is closed. As shown in FIG. 7-9, the actuator part 31 of push-buttons 32 is located on the inner surface of flip member 28 and the button part is located on the outer surface of the flip member 28 exposed to the user. When the user selects a particular push-button 32, the actuator 31 makes contact with the touch-sensitive display 24 and provides a stimulus to the touch-sensitive display 24 and related display circuitry. This stimulus is then translated into the desired telephone function (e.g., key push of the number "2"). After entering the desired telephone number, the user selects SND button 25 to place telephone 16 off-hook and to initiate the call to a cellular network.

A circuit arrangement of illustrative wireless flip telephone 16 is shown in FIG. 11. For example, user selections made from the touch-sensitive display 24 while initiating a telephone call are interpreted by central processing unit (CPU) 84. Thereafter, the CPU 84 invokes the appropriate commands through the telephony circuits 86 to place the call via a cellular network using the RF circuitry 88. Further, CPU 84 provides any necessary processing required for displaying information on touch-sensitive display 24 and provides the means to display user-programmable soft keys and application software icons directly on the touch-sensitive display 24.

In accordance with the present illustrative embodiment, the touch-sensitive display 24 may also receive input directly from the user without the use of numeric keypad 30. FIG. 4 shows a perspective view of the wireless flip telephone 16 in the fully open position with an illustrative configuration of touch-sensitive display 24. Illustratively, after dialing and initiating the telephone call via the cellular network as discussed above, the user may open and fully extend the flip member 28. Similar to when in the flip member closed position, a detection is made that flip member 28 is now in an open position and touch-sensitive display 24 is placed in a mode to be configured with various touch-sensitive elements. The configuration of the touch-sensitive display 24 is facilitated by icons 82 which when selected by the user will affect a particular display configuration. For example, FIG. 4 shows a configuration where the user, after selecting the appropriate icon 82, has implemented automatic speed dialing. Speed dialing is further facilitated by soft keys 80 which appear on the touch-sensitive display 24. The user may then select a particular soft key 80 to speed dial the party associated with that key.

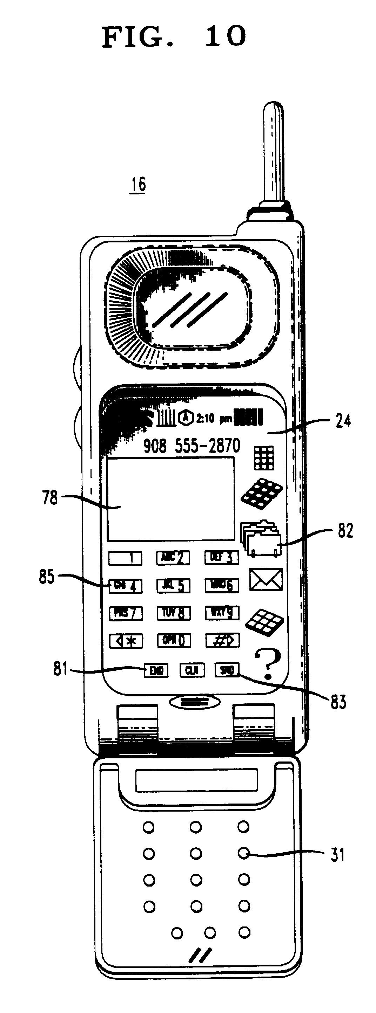

FIG. 10 shows another alternative embodiment of a layout for touch-sensitive display 24 in the flip open position. A portion of touch-sensitive display 24 is partitioned for display area 78 which provides for the display of various text or graphical information from an on-line service (e.g. Internet). Having fully opened the flip member to expose the entire touch-sensitive display 24, the user may make a selection from the various options presented on the display 24. For example, the user could select icon 82 to initiate an application software program (e.g., personal address program, user help, etc...). Further, display area 24 may be configured with a touch-sensitive numeric keypad 85 thereby providing the user another dialing alternative in the flip open position. Thus, the user may dial a desired telephone number from touch-sensitive keypad 85 and initiate a call to the dialed number via SND key 83. Upon finishing the call, the user may place telephone 16 in a on-hook mode by depressing END key 81. From the foregoing, and with a comparison to the visual display 6 of the prior art flip phone of FIG. 1, it will be readily apparent that the wireless flip telephone 16 of the present invention provides a significantly larger display area to the user. In addition, an increase in functionality to a user of a portable wireless telephone is provided without an increase in size over conventional wireless flip telephones.

As discussed previously, the touch-sensitive display 24 is preferably an LCD having a touch-sensitive overlay. The schematic of a conventional LCD display is shown in FIG. 5. Intersecting row and column electrodes, 40 and 42 respectively, define pixels in an X-Y orthogonal matrix. Matrix addressing is used to display information by changing the reflectivity or transmissivity of pixels on the display. In matrix addressing, each pixel is related to a set of coordinates in the matrix and has a row and column address. Each of the pixels has one terminal connected together with other pixels in a row, and the other terminal is connected with other pixels in a column located orthogonal to the row. When a pixel is selected by a controller 43, a voltage is applied to corresponding row and column leads, by row driver circuit 44 and column driver circuit 46 to define the coordinates of the selected pixel. The row and column leads are multiplexed so only one row lead and column lead receives an electrical signal at a given instant in time. This multiplexing arrangement eliminates the activation of invalid pixels.

Matrix addressing, depending upon the overall size of the display, may require a very high rate of multiplexing which produces signal pulses with very short duty cycles. These short duty cycles can affect the visual performance of LCD's. In order to eliminate any such degradation visual performance, a transistor or diode switch 48 in combination with a capacitor 50 may be incorporated at each pixel matrix junction. The capacitor, charged by the diode or transistor arrangement, provides a sufficiently long pulse across the display medium to cause a visual response. Depending upon the size of the display and rate of multiplexing selected, it will be understood by those skilled in the art that the capacitor and diode arrangement may be omitted in certain LCD configurations.

FIG. 6 shows a conventional overlay 54 that utilizes a membrane switch, in combination with an addressing and detection scheme. The membrane switch facilitates user interaction with an LCD controller system. As shown in FIG. 6, the overlay 54 includes a plurality of spaced apart parallel row electrodes 60 oriented in the X-axial direction disposed on an inner surface of a front, optically transparent panel member 56. Additionally, a plurality of spaced apart parallel column electrodes 62 are oriented in the Y-axial direction and disposed on an inner surface of a rear, optically transparent panel member 58. The front panel 56 and rear panel 58 are separated by an air gap which electrically isolates the row electrodes 60 from the column electrodes 62. At the end of each column electrode 62, a pull up resistor 64 is connected to a reference voltage 66, and a comparator 68 which detects a change in voltage across the pull up resistor 64. At the end of each row electrode 60 there is a transistor 72 which is addressed by scan logic 76, and an emitter 74 tied to ground.

Illustratively, when contact of the touch-sensitive display 24 occurs (e.g., the user presses a push-button), contact with an "active" row electrode 60, in which transistor 72 is activated, with a column electrode 62 causes a voltage change in the output of comparator 68. The comparator 68 output is provided to the sense logic 70 which outputs the address of the contacting column electrode 62. The location of the area contacted is defined by the coordinates of the contacting active row electrode and the contacting column electrode.

Additional advantages and modifications will readily occur to those skilled in the art. Therefore, the invention in its broader aspects is not limited to specific details shown and described herein. Accordingly, various modifications may be made without departing from the spirit or scope of the general inventive concept as defined by the appended claims and their equivalents.

## Claims

1. A portable telephone apparatus comprising:
a main body;
a flip member having an inner and outer surface;
a keypad, located on said outer surface of said flip member, having a plurality of push-buttons which can be selectively actuated for operating said portable telephone apparatus;
a touch-sensitive display which receives and is mechanically responsive to input entered from said keypad, said touch-sensitive screen being disposed in said main body; and
said flip member being rotatable between a first position in which said touch-sensitive display and said inner surface of said flip member are in a substantial overlapping relationship, and a second position in which said flip member extends from said main body exposing a substantial portion of said touch-sensitive display.

2. The portable telephone apparatus of claim 1, wherein said apparatus further comprises means for presenting a plurality of functions on said touch-sensitive display, at least one of said functions being selectable directly from said touch-sensitive display by a user when said flip member is in said second position.

3. The portable telephone apparatus of claim I wherein said main body includes a microphone.

4. The portable telephone apparatus of claim 1 wherein said inner surface of said flip member includes a microphone.

5. The portable telephone apparatus of claim I wherein at least one of said plurality of push-buttons provides a direct stimulus to said touch-sensitive display through said flip member when said flip member is in said first position and said push-button is actuated.

6. The portable telephone apparatus of claim 5 wherein said apparatus further comprises means including said touch-sensitive display and responsive to said direct stimulus provided thereto by said one push-button for generating a signal representing a numeral or a function associated with said one push-button.

7. The portable telephone apparatus of claim 1 wherein said apparatus further comprises circuitry which originates a telephone call via a cellular radio network in response to said input.

8. The portable telephone apparatus of claim 2, wherein said apparatus further comprises means for detecting when said flip member is in said second position.

9. The portable telephone apparatus of claim 2 wherein said touch-sensitive display is a liquid crystal display having a touch-sensitive overlay.

10. The portable telephone apparatus of claim 2, wherein said plurality of functions include user-programmable soft keys.

11. The portable telephone apparatus of claim 3, wherein said main body further comprises a hinge for connecting said main body to said flip member.

12. A portable telephone apparatus comprising:
a main body having a speaker, an antenna and RF circuitry;
a microphone;
a flip member having an inner and outer surface;
a keypad, located on said outer surface of said flip member, having a plurality of push-buttons which can be selectively actuated for operating said portable telephone apparatus;
a touch-sensitive display which receives and is mechanically responsive to input entered from said keypad, said touch-sensitive display being disposed in said main body; and
said flip member being rotatable between a first position in which said touch-sensitive display and said inner surface of said flip member are in a substantial overlapping relationship, and a second position in which said flip member extends from said main body exposing a substantial portion of said touch-sensitive display.
